# FASCICULE DE BREVET EUROPEEN

(11) **EP 0 755 553 B1**
(45) Date de publication et mention de la délivrance du brevet: **10.04.2002**
(21) Numéro de dépôt: 96902321.7
(22) Date de dépôt: 01.02.1996
(51) Int. Cl.: G09B 19/16, G09B 9/042, G09B 9/052

(54) **INSTALLATION POUR L'APPRENTISSAGE ET LE PERFECTIONNEMENT A LA CONDUITE DE VEHICULES AUTOMOBILES**
ANLAGE FÜR DAS ERLERNEN UND DIE FORTBILDUNG DES FÜHRENS VON KRAFTFAHRZEUGEN
FACILITY FOR TEACHING AND IMPROVING DRIVING SKILLS

(30) Priorité: 10.02.1995 FR 9501742
(43) Date de publication de la demande: 29.01.1997
(73) Titulaire: Ficheux, Patrice, 69780 Saint-Pierre-de-Chandieu (FR)
(72) Inventeur: Ficheux, Patrice, 69780 Saint-Pierre-de-Chandieu (FR)
(74) Mandataire: Maureau, Philippe
(86) Numéro de dépôt international: FR9600168
(87) Numéro de publication internationale: WO9624918

(56) Documents cités:
- EP-A- 0 290 364
- DE-A- 4 134 601
- FR-A- 2 183 448
- FR-A- 2 567 667
- FR-A- 2 706 060
- US-A- 3 991 485

## Description

La présente invention a pour objet une installation pour l'apprentissage et le perfectionnement à la conduite de véhicules automobiles.

Les automobilistes reçoivent tout d'abord un enseignement pour l'apprentissage de la conduite de véhicules automobiles par des auto-écoles qui les amènent à un niveau de compétence permettant l'obtention d'un permis de conduire. Cet enseignement est réalisé sur route avec des véhicules à double commande. De ce fait, l'apprenti-conducteur est rarement placé dans certaines conditions, telles que contournement d'un obstacle imprévu dans une manoeuvre d'évitement, rattrapage d'une perte de contrôle du véhicule, et freinage dans une situation d'urgence, alors même que la réglementation en vigueur exige que de telles situations aient été vécues.

Outre l'absence de respect, dans un grand nombre de cas, de ces dispositions réglementaires, l'apprenti-conducteur n'est pas sensibilisé sur les situations dangereuses qu'il peut rencontrer sur la route, ce qui, d'une part, peut l'inciter à minimiser les risques encourus dans des situations atmosphériques mauvaises, telles que pluie ou neige, et, d'autre part, ne peut lui permettre de contrôler son véhicule dans certaines situations délicates, dans la mesure où ces situations n'ont jamais été vécues auparavant dans le cadre de son enseignement.

Il existe des centres de perfectionnement à la conduite de véhicules automobiles qui comprennent un certain nombre de pistes de différents profils revêtues d'une matière synthétique qui, lorsqu'elle est arrosée avec de l'eau, possède un faible coefficient d'adhérence. Il est donc possible de reconstituer des conditions de circulation sur chaussée enneigée ou verglacée, et de permettre à des stagiaires d'évoluer et d'effectuer des exercices à faible vitesse, c'est-à-dire sans danger. Sur ce sol glissant, l'enseignement consiste à réaliser des exercices d'évitement d'obstacles, de rattrapage d'une perte de contrôle du véhicule ou de freinage d'urgence.

Ces centres nécessitent une infrastructure importante et conviennent bien pour un enseignement de base.

Le document FR-A-2 706 060 décrit une telle installation comprenant une piste d'évolution pour les véhicules, comportant plusieurs zones avec des coefficients d'adhérence différents. Ce document indique également la présence d'au moins un obstacle amovible pouvant apparaître devant un véhicule, pour tester les réactions du conducteur.

Le but de l'invention est de fournir une installation pour l'apprentissage et le perfectionnement à la conduite de véhicules automobiles qui nécessite une infrastructure très simple, mais dont les équipements soient suffisamment performants pour permettre de suivre en permanence différents paramètres du véhicule évoluant sur la piste, notamment la position de celui-ci, la vitesse du véhicule ainsi qu'éventuellement d'autres paramètres, tels que le temps que met un véhicule pour dégager la piste après avoir été immobilisé sur celle-ci.

A cet effet, l'installation qu'elle concerne, du type comprenant une piste pour la circulation des véhicules revêtue, sur au moins une partie de sa surface, d'un revêtement glissant et arrosé périodiquement avec de l'eau, et comportant au moins un obstacle amovible dont l'apparition sur la piste est commandée par détection du véhicule évoluant sur celle-ci, est caractérisée en ce que la piste contient, au moins dans sa zone équipée d'un revêtement glissant et comportant l'obstacle amovible, une série de capteurs à résonance magnétique ou boucles magnétiques, reliés à un ordinateur pour fournir en permanence la position du véhicule sur la piste et la vitesse de celui-ci, l'apparition de l'obstacle amovible sur la piste étant commandée par le passage d'un véhicule au-dessus de l'un des capteurs d'une série de plusieurs capteurs successifs installés dans une voie de circulation.

Les capteurs sont noyés dans la piste, entre deux couches d'enrobé constitutif de la piste. Leur position est bien connue, et la distance entre les différents capteurs est également connue, de telle sorte que, l'ordinateur étant associé à un chronomètre, il est possible par mesure du temps nécessaire pour passer d'un capteur à un autre, de déduire la vitesse du véhicule.

D'autres caractéristiques de l'invention ressortent des autres revendications.

Les capteurs destinés à mesurer la vitesse du véhicule peuvent être ou non les mêmes que ceux indiquant la position du véhicule sur la piste.

Afin de contrôler au mieux la position du véhicule dans la zone dans laquelle se trouve l'obstacle amovible, l'espacement entre les capteurs, considéré dans le sens de la longueur de la piste, diminue, dans le sens de déplacement d'un véhicule, depuis l'extrémité de la piste d'où démarre le véhicule jusqu'à la zone dans laquelle se trouve l'obstacle amovible.

Suivant une forme avantageuse d'exécution de cette installation, le capteur de la série fournissant l'instruction d'apparition de l'obstacle est déterminé de façon aléatoire par l'ordinateur.

En outre, et suivant une possibilité, plus le coefficient d'adhérence de la voie de circulation est faible, plus la distance entre l'obstacle amovible et la série de capteurs provoquant l'apparition de celui-ci est importante.

De plus, avantageusement, le choix par l'ordinateur du capteur commandant l'obstacle amovible tient compte de la vitesse du véhicule, les boucles susceptibles de commander l'obstacle étant de plus en plus près de celui-ci lorsque la vitesse du véhicule diminue.

Ces différentes dispositions introduisent un caractère aléatoire augmentant l'efficacité de l'exercice effectué, dans la mesure où un même conducteur utilisant successivement plusieurs fois la même piste ne peut pas savoir à quel moment l'obstacle amovible va apparaître et ainsi ne peut pas anticiper sur l'apparition de cet obstacle.

Afin de parfaitement suivre le positionnement du véhicule dans la zone de freinage ou d'évitement d'obstacles, cette installation comprend, dans la zone de l'obstacle amovible de chaque voie de circulation, des capteurs à résonance magnétique disposés entre les voies de circulation.

En outre, l'ordinateur mémorise la vitesse du véhicule lors de l'apparition de l'obstacle amovible et l'affiche sur un panneau disposé en bout de la piste.

De ce fait, un utilisateur évoluant à plusieurs reprises sur la piste pourra sur sa propre initiative, ou sur l'initiative d'un moniteur, modifier sa vitesse d'un passage à un autre pour obtenir différents types de comportement de son véhicule.

Cet agencement incite le conducteur d'un véhicule à dégager le plus rapidement possible la piste après que son véhicule ait été immobilisé sur celle-ci, par exemple à la suite d'un tête à queue. Il est en effet important d'enseigner à un conducteur que lorsqu'un incident est survenu sur son véhicule et qu'il est immobilisé sur une voie de circulation, il dégage au plus tôt celle-ci, car il constitue un obstacle dangereux pour les autres automobilistes.

Suivant une forme d'exécution de cette installation, les différents capteurs sont reliés à l'ordinateur par un réseau, chaque capteur envoyant en permanence une information binaire que l'ordinateur reconnaît grâce à un codage prédéfini.

De toute façon, l'invention sera bien comprise à l'aide de la description qui suit en référence au dessin schématique annexé représentant, à titre d'exemple non limitatif, une forme d'exécution de cette installation :

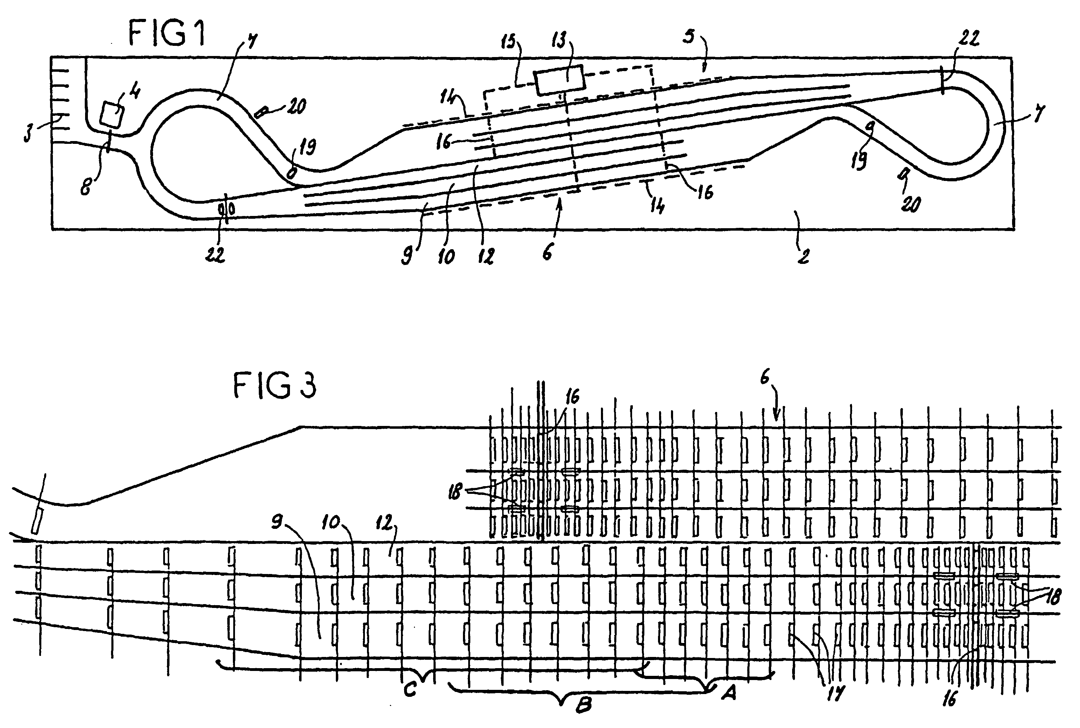

Figure 1 en est une vue de dessus ;

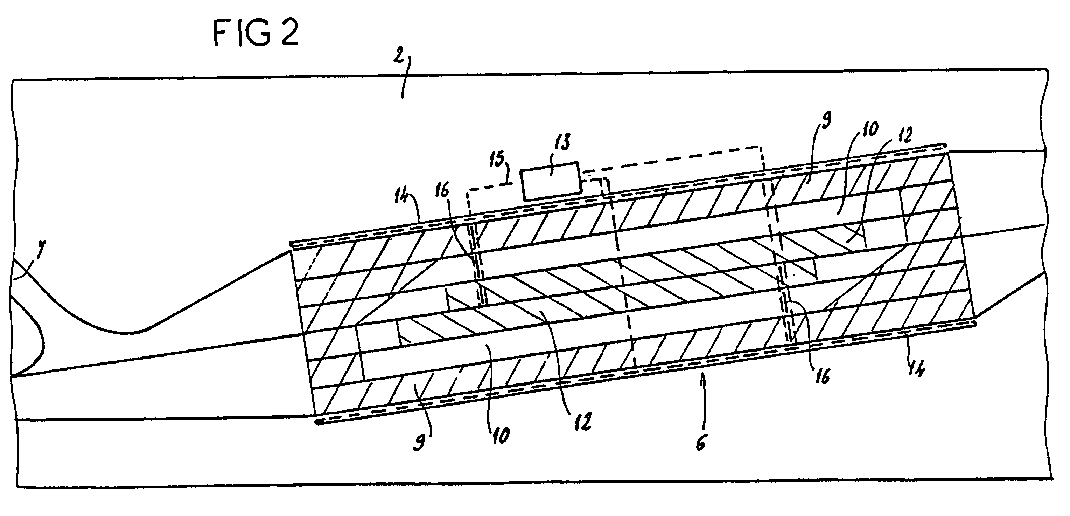

Figure 2 est une vue de dessus à échelle agrandie de la piste destinée à l'évolution des véhicules ;
Figure 3 est une vue de dessus à échelle encore plus agrandie d'une partie de la piste montrant notamment le positionnement des capteurs.

L'installation selon l'invention est située sur un terrain 2 d'environ 250 m de long et 50 m de large. Sur ce terrain est aménagée une zone de stationnement 3 pour des véhicules en attente, un bâtiment 4 dans lequel se trouve un moniteur, ainsi qu'une piste 5 comportant une zone droite 6 destinée aux évolutions des véhicules et deux zones 7 d'extrémité formant des boucles permettant aux véhicules de faire demi-tour. L'accès à la piste 5 est contrôlé par une barrière 8 ne permettant l'entrée sur la piste que de quelques véhicules, par exemple cinq au maximum. La zone d'évolution comprend six voies de circulation dont trois sont destinées à l'évolution dans un sens et dont les trois autres sont destinées à l'évolution en sens inverse. Chaque série de trois voies comprend de l'extérieur de la piste vers l'intérieur de celle-ci, trois voies de circulation adjacentes, à savoir une première voie 9 réalisée en enrobé traditionnel constitutif d'une chaussée avec un coefficient d'adhérence ≥ 0,7, une voie 10 revêtue d'une résine assurant un coefficient d'adhérence de l'ordre de 0,4 à 0,5, et une voie 12 revêtue de résine et possédant un coefficient d'adhérence beaucoup plus faible ≥ 0,25. En bordure de la piste est prévue une réserve d'eau 13 destinée à alimenter une rampe longitudinale 14 d'arrosage de la piste pour maintenir une humidité suffisante sur celle-ci pour assurer une adhérence suffisamment faible. Cette réserve d'eau alimente également, par l'intermédiaire de canalisations 15, des buses débouchant dans chacune des voies de circulation 9, 10, 12 des deux séries de voies de circulation, ces buses étant destinées à former, lorsqu'elles sont alimentées en eau sous pression, un obstacle 16 formant un rideau d'eau.

A l'intérieur de chaque voie de circulation de la piste sont noyés dans l'enrobé des capteurs à résonance magnétique 17 ou boucles magnétiques. Les capteurs associés à chaque voie de circulation sont décalés longitudinalement les uns par rapport aux autres, et la distance entre deux capteurs voisins diminue au fur et à mesure que l'on se rapproche de l'obstacle 16, dans le sens de circulation du véhicule.

Les différents capteurs sont reliés à un ordinateur par un système de réseau et envoient en permanence une information binaire à cet ordinateur, l'information étant reconnue grâce à un codage prédéfini. Chaque boucle est donc scrutée en permanence.

Ces capteurs ou boucles permettent, d'une part, de déterminer la vitesse du véhicule se déplaçant sur une voie de circulation, et, d'autre part, de déterminer la position du véhicule sur la piste. En outre, certains des capteurs sont agencés pour provoquer l'apparition de l'obstacle 16.

Pour la voie de circulation 9 ce sont les capteurs identifiés par l'accolade A qui sont agencés pour provoquer l'apparition de l'obstacle 16, pour la voie de circulation 10 ce sont les capteurs référencés par l'accolade B qui sont agencés pour provoquer l'apparition de l'obstacle 16 et pour la voie de circulation la plus glissante 12 ce sont les capteurs référencés par l'accolade C qui sont agencés pour provoquer l'apparition de l'obstacle 16. L'apparition de l'obstacle est obtenue par passage d'un véhicule sur l'un quelconque des détecteurs appartenant à la série considérée respectivement A, B, C de détecteurs selon qu'il s'agit de la voie 9, 10 ou 12. Le détecteur déclenchant l'obstacle 16 peut être choisi de façon aléatoire par l'ordinateur ou celui-ci peut également intégrer, en plus du caractère aléatoire, la vitesse du véhicule de façon à ce que ce soient les capteurs qui soient les plus proches de l'obstacle qui réagissent si le véhicule se déplace lentement.

Il est également prévu, dans la zone proche de l'obstacle 16, des capteurs 18 disposés entre les voies de circulation respectivement 9-10 et 10-12.

Il est prévu, à la sortie de chaque série de voies de circulation, un capteur 19, ainsi qu'un dispositif d'affichage 20 permettant l'affichage de la vitesse du véhicule au moment où l'obstacle est déclenché ainsi que le temps que met le véhicule pour dégager la piste lorsque le véhicule s'arrête sur celle-ci, par exemple à la suite d'un tête à queue.

Il est enfin prévu des barrières 22 permettant l'accès sur la piste d'un seul véhicule à la fois. Ces barrières 22 sont gérées par l'ordinateur, de telle sorte que tous les véhicules se trouvant sur l'installation aient effectué le parcours dans un sens, avant de leur permettre d'effectuer un parcours dans l'autre sens.

En pratique, les différents véhicules susceptibles d'évoluer simultanément dans l'installation sont reliés par radio au bâtiment dans lequel se trouve le moniteur. Les véhicules peuvent accéder sur la piste par ouverture de la barrière 8. Tous les véhicules attendent derrière la barrière 22. Après levée de la barrière 22, un véhicule s'engage sur la piste sur une voie de circulation 9, 10 ou 12. Il déclenche l'obstacle 16, ce déclenchement provoquant la mémorisation de la vitesse qui s'affiche sur le panneau 20. Le véhicule en exercice s'arrête devant l'obstacle ou évite celui-ci. Si le véhicule s'arrête, un chronomètre est déclenché, ce chronomètre mesurant le temps que met le véhicule à quitter la piste. Dès immobilisation du véhicule ou si ce dernier se trouve sur l'obstacle, celui-ci est effacé. Lorsque le véhicule passe sur le capteur de sortie 19, l'affichage 20 est remis à zéro et la barrière 22 se lève pour permettre l'évolution d'un autre véhicule sur la piste. Une caméra peut être prévue le long de la piste, afin de permettre au moniteur se trouvant dans le bâtiment de parfaitement visualiser les erreurs de conduite pouvant être commises par le conducteur, notamment les erreurs de blocage de roues, et permettre de signaler ces erreurs au conducteur par radio.

Ce n'est que lorsque tous les véhicules auront effectué un parcours "aller" sur la piste, que la barrière 22 située à l'autre extrémité de celle-ci pourra être levée pour permettre d'effectuer le trajet "retour".

Il est intéressant de noter que l'ordinateur utilisé pour la gestion des obstacles ainsi que pour le contrôle de la vitesse et de la position des véhicules peut être mis à profit pour mémoriser les performances de chaque véhicule, avec édition d'une fiche de résultats mentionnant les différentes mesures effectuées lors de chaque passage en termes de vitesse, distance d'arrêt et type de voie de circulation utilisée, par exemple.

## Revendications

1. Installation pour l'apprentissage et le perfectionnement à la conduite de véhicules automobiles, du type comprenant une piste (5) pour la circulation des véhicules revêtue, sur au moins une partie (6) de sa surface, d'un revêtement glissant et arrosé périodiquement avec de l'eau, et comportant au moins un obstacle amovible (16) dont l'apparition sur la piste est commandée par détection du véhicule évoluant sur celle-ci, **caractérisée en ce que** la piste contient, au moins dans sa zone équipée d'un revêtement glissant et comportant l'obstacle amovible, une série de capteurs (17) à résonance magnétique ou boucles magnétiques, reliés à un ordinateur pour fournir en permanence la position du véhicule sur la piste et la vitesse de celui-ci, l'apparition de l'obstacle amovible (16) sur la piste étant commandée par le passage d'un véhicule au-dessus de l'un des capteurs (17) d'une série de plusieurs capteurs successifs installés dans une voie de circulation.

2. Installation selon la revendication 1, **caractérisée en ce que** le capteur (17) de la série fournissant l'instruction d'apparition de l'obstacle est déterminé de façon aléatoire par l'ordinateur.

3. Installation selon la revendication 1, **caractérisée en ce que** la piste de circulation comprend plusieurs voies de circulation (9, 10, 12) parallèles et adjacentes équipées de revêtements dont les coefficients d'adhérence sont différents, chaque voie étant munie de capteurs.

4. Installation selon les revendications 2 et 3, **caractérisée en ce que** plus le coefficient d'adhérence de la voie de circulation est faible, plus la distance entre l'obstacle amovible (16) et la série de capteurs (17) provoquant l'apparition de celui-ci est importante.

5. Installation selon l'une quelconque des revendications 2 à 4, **caractérisée en ce que** le choix par l'ordinateur du capteur (17) commandant l'obstacle amovible tient compte de la vitesse du véhicule, les capteurs susceptibles de commander l'obstacle (16) étant de plus en plus près de celui-ci lorsque la vitesse du véhicule diminue.

6. Installation selon l'une quelconque des revendications 1 à 5, **caractérisée en ce que** l'espacement entre les capteurs (17), considéré dans le sens de la longueur de la piste, diminue, dans le sens de déplacement d'un véhicule, depuis l'extrémité de la piste d'où démarre le véhicule jusqu'à la zone dans laquelle se trouve l'obstacle amovible (16).

7. Installation selon l'une quelconque des revendications 1 à 6, **caractérisée en ce qu'**elle comprend, en outre, dans la zone de l'obstacle amovible (16) de chaque voie de circulation, des capteurs à résonance magnétique (18) disposés entre les voies de circulation.

8. Installation selon l'une quelconque des revendications 1 à 7, **caractérisée en ce que** les différents capteurs (17, 18) sont reliés à l'ordinateur par un réseau, chaque capteur envoyant en permanence une information binaire que l'ordinateur reconnaît grâce à un codage prédéfini.

9. Installation selon l'une quelconque des revendications 1 à 8, **caractérisée en ce que** l'ordinateur mémorise la vitesse du véhicule lors de l'apparition de l'obstacle amovible (16) et l'affiche sur un panneau (20) disposé en bout de la piste.

10. Installation selon l'une quelconque des revendications 1 à 9, **caractérisée en ce que** lorsque le véhicule est arrêté au-dessus d'un même capteur (17, 18) pendant un temps supérieur à une valeur déterminée, l'ordinateur déclenche un chronomètre qui est arrêté lorsque le véhicule passe sur un capteur (19) situé à la sortie de la piste, l'affichage du temps mesuré étant effectué sur un panneau disposé en bout de la piste.

11. Installation selon la revendication 3, **caractérisée en ce qu'**elle comprend trois types de voies de circulation (9, 10, 12) dont les coefficients d'adhérence sont respectivement ≥ 0,7, de l'ordre de 0,4 et ≥ 0,25.

12. Installation selon l'une quelconque des revendications 3 et 11, **caractérisée en ce qu'**elle comprend deux séries de trois voies de circulation (9, 10, 12) destinées à deux sens de circulation inverses, les deux voies (12) les plus glissantes des deux séries étant adjacentes et les deux voies (9) les moins glissantes étant les plus éloignées l'une de l'autre.

13. Installation selon l'une quelconque des revendications 1 à 12, **caractérisée en ce qu'**elle comprend deux barrières (22) disposées aux deux extrémités de la piste, dont la gestion est réalisée par l'ordinateur à partir de capteurs (19) intégrés aux extrémités de la piste, de telle sorte qu'un seul véhicule puisse évoluer sur la piste et que la circulation dans le sens "retour" ne soit autorisée qu'après tous les véhicules présents aient effectué leur parcours dans le sens "aller".

14. Installation selon l'une quelconque des revendications 1 à 13, **caractérisée en ce que** chaque obstacle amovible (16) est constitué par un rideau d'eau sous pression amenée par des buses débouchant dans le revêtement de la piste, et dont l'arrêt de l'alimentation est commandé par passage d'un véhicule au-dessus d'un capteur (17) situé au niveau des buses, au-dessus d'un capteur (19) situé en bout de piste, ou par arrêt d'un véhicule au-dessus d'un capteur (17, 18).

## Claims

1. Installation for learning to drive motor vehicles and for improving driving skills, of the type comprising a track (5) on which vehicles can run and which is coated, over at least part (6) of its surface, with a slippery coating which is periodically showered with water and comprises at least one removable obstacle (16) whose appearance on the track is controlled by the detection of the vehicle travelling along this track, **characterized in that** the track contains, at least in its region equipped with a slippery coating and comprising the removable obstacle, a series of magnetic loops or magnetic-resonance sensors (17) connected to a computer to constantly supply the position of the vehicle on the track and the speed thereof, the appearance of the removable obstacle (16) on the track being controlled by the passage of a vehicle over one of the sensors (17) of a series of several successive sensors installed in a lane.

2. Installation according to Claim 1, **characterized in that** the sensor (17) of the series supplying the instruction for the obstacle to appear is determined randomly by the computer.

3. Installation according to Claim 1, **characterized in that** the test track comprises several parallel and adjacent lanes (9, 10, 12) equipped with coatings with different adhesion coefficients, each lane being equipped with sensors.

4. Installation according to Claims 2 and 3, **characterized in that** the lower the adhesion coefficient of the lane, the greater the distance between the removable obstacle (16) and the series of sensors (17) could cause it to appear.

5. Installation according to any one of Claims 2 to 4, **characterized in that** the choice made by the computer as to which sensor (17) will control the removable obstacle, takes account of the speed of the vehicle, the sensors likely to control the obstacle (16) being increasingly close to this obstacle as the vehicle speed decreases.

6. Installation according to any one of Claims 1 to 5, **characterized in that** the spacing between the sensors (17), considered in the direction of the length of the track, decreases, in the direction of travel of a vehicle, from the end of the track from which the vehicle starts to the region in which the removable obstacle (16) is situated.

7. Installation according to any one of Claims 1 to 6, **characterized in that** it further comprises, in the region of the removable obstacle (16) of each lane, magnetic-resonance sensors (18) arranged between the lanes.

8. Installation according to any one of Claims 1 to 7, **characterized in that** the various sensors (17, 18) are connected to the computer by a network, each sensor constantly sending out binary information that the computer recognizes through predefined coding.

9. Installation according to any one of Claims 1 to 8, **characterized in that** the computer memorizes the speed of the vehicle at which the removable obstacle (16) appears and displays it on a panel (20) arranged at the end of the track.

10. Installation according to any one of Claims 1 to 9, **characterized in that** when the vehicle is stopped over one and the same sensor (17, 18) for a time longer than a predetermined time, the computer starts a timer which is stopped when the vehicle passes over a sensor (19) located at the exit from the track, the measured time being displayed on a panel arranged at the end of the track.

11. Installation according to Claim 3, **characterized in that** it comprises three types of lane (9, 10, 12) the adhesion coefficients of which are respectively greater than or equal to 0.7, of the order of 0.4 and greater than or equal to 0.25.

12. Installation according to either one of Claims 3 and 11, **characterized in that** it comprises two series of three lanes (9, 10, 12) intended for two opposite directions of traffic flow, the most slippery two lanes (12) being adjacent and the least slippery two lanes (9) being the furthest apart.

13. Installation according to any one of Claims 1 to 12, **characterized in that** it comprises two barriers (22) arranged at the two ends of the track, these being controlled by the computer from sensors (19) built in to the ends of the track so that just one vehicle can travel along the track and so that traffic flow in the "return" direction is not allowed until after all the vehicles present have made their "outbound" journeys.

14. Installation according to any one of Claims 1 to 13, **characterized in that** each removable obstacle (16) consists of a curtain of water under pressure supplied by nozzles opening into the track coating, and the supply to which is switched off by the passage of a vehicle over a sensor (17) situated in the region of the nozzles, over a sensor (19) situated at the end of the track, or by a vehicle coming to rest over a sensor (17, 18).

## Patentansprüche

1. Anlage zum Erlernen und Verbessern des Fahrens von Automobilen, mit einer Bahn (5), auf der Fahrzeuge verkehren und die auf mindestens einem Teil (6) ihrer Oberfläche mit einer glatten und periodisch mit Wasser begossenen Beschichtung beschichtet ist und mindestens ein wegnehmbares Hindernis (16) aufweist, dessen Erscheinen auf der Bahn durch die Erfassung des sich auf ihr bewegenden Fahrzeugs gesteuert wird, **dadurch gekennzeichnet, dass** die Bahn zumindest in ihrem mit einer glatten Beschichtung ausgestatteten und das wegnehmbare Hindernis aufweisenden Bereich eine Reihe von Magnetresonanz-Sensoren (17) oder magnetischer Schleifen enthält, die mit einem Rechner verbunden sind, um ständig die Position des Fahrzeugs auf der Bahn und dessen Geschwindigkeit zu liefern, wobei das Erscheinen des wegnehmbaren Hindernisses (16) auf der Piste gesteuert wird durch das Vorbeifahren eines Fahrzeugs oberhalb eines der Sensoren (17) einer Reihe mehrerer aufeinanderfolgender Sensoren, die in einer Fahrspur installiert sind.

2. Anlage nach Anspruch 1, **dadurch gekennzeichnet, dass** der Sensor (17) der Reihe, welche den Befehl liefert, dass das Hindernis erscheinen soll, durch den Rechner rein zufällig bestimmt wird.

3. Anlage nach Anspruch 1, **dadurch gekennzeichnet, dass** die Fahrbahn mehrere parallele und aneinandergrenzende Fahrspuren (9, 10, 12) aufweist, die mit Beschichtungen ausgestattet sind, deren Haftkoeffizienten verschieden sind, wobei jede Spur mit Sensoren ausgestattet ist.

4. Anlage nach Anspruch 2 und 3, **dadurch gekennzeichnet, dass** der Abstand zwischen dem wegnehmbaren Hindernis (16) und der Reihe der Sensoren (17), die dessen Erscheinen hervorrufen, umso größer ist, je kleiner der Haftkoeffizient der Fahrspur ist.

5. Anlage nach einem der Ansprüche 2 bis 4, **dadurch gekennzeichnet, dass** die durch den Rechner durchgeführte Auswahl des Sensors (17), der das wegnehmbare Hindernis steuert, die Geschwindigkeit des Fahrzeugs berücksichtigt, wobei die Sensoren, welche das Hindernis (16) steuern können, zunehmend näher bei diesem sind, wenn die Geschwindigkeit des Fahrzeugs abnimmt.

6. Anlage nach einem der Ansprüche 1 bis 5, **dadurch gekennzeichnet, dass** der in der Richtung der Länge der Piste betrachtete Abstand zwischen den Sensoren (17) in der Bewegungsrichtung eines Fahrzeugs vom Ende der Piste, bei dem das Fahrzeug startet, bis zu dem Bereich, in dem sich das wegnehmbare Hindernis (16) befindet, abnimmt.

7. Anlage nach einem der Ansprüche 1 bis 6, **dadurch gekennzeichnet, dass** sie darüber hinaus in dem Bereich des wegnehmbaren Hindernisses (16) jeder Fahrspur Magnetresonanz-Sensoren (18) aufweist, die zwischen den Fahrspuren angeordnet sind.

8. Anlage nach einem der Ansprüche 1 bis 7, **dadurch gekennzeichnet, dass** die verschiedenen Sensoren (17, 18) mit dem Rechner durch ein Netz verbunden sind, wobei jeder Sensor ständig Binärinformation aussendet, die der Rechner aufgrund einer vorbestimmten Codierung erkennt.

9. Anlage nach einem der Ansprüche 1 bis 8, **dadurch gekennzeichnet, dass** der Rechner die Geschwindigkeit des Fahrzeugs beim Erscheinen des wegnehmbaren Hindernisses (16) speichert und sie auf einer am Ende der Bahn angeordneten Tafel (20) anzeigt.

10. Anlage nach einem der Ansprüche 1 bis 9, **dadurch gekennzeichnet, dass** dann, wenn das Fahrzeug oberhalb eines gleichen Sensors (17, 18) während einer Zeit angehalten wird, die größer als ein vorbestimmter Wert ist, der Rechner einen Chronometer auslöst, der dann angehalten wird, wenn das Fahrzeug an einen Sensor (19) vorbeifährt, der sich am Ausgang der Bahn befindet, wobei die Anzeige der gemessenen Zeit auf einer am Ende der Bahn angeordneten Tafel erfolgt.

11. Anlage nach Anspruch 3, **dadurch gekennzeichnet, dass** sie drei Arten von Fahrspuren (9, 10, 12) aufweist, deren Haftkoeffizienten jeweils ≥ 0,7, etwa 0,4 und ≥ 0,25 sind.

12. Anlage nach einem der Ansprüche 3 und 11, **dadurch gekennzeichnet, dass** sie zwei Reihen von drei Fahrspuren (9, 10, 12) aufweist, die für zwei umgekehrte Fahrrichtungen bestimmt sind, wobei die beiden glättesten Spuren (12) der beiden Reihen aneinanderliegend sind und die beiden am wenigsten glatten Spuren (9) voneinander am weitesten entfernt sind.

13. Anlage nach einem der Ansprüche 1 bis 12, **dadurch gekennzeichnet, dass** sie zwei Schranken (22) aufweist, die an den beiden Enden der Bahn angeordnet sind, deren Ansteuerung durch den Rechner auf der Basis von Sensoren (19) durchgeführt wird, die an den Enden der Bahn integriert sind, so dass sich ein einziges Fahrzeug auf der Bahn bewegen kann und das der Verkehr in der "Rückfahrt-Richtung" erst erlaubt wird, nachdem sämtliche vorhandenen Fahrzeuge ihre Fahrt in der "Hinfahrt-Richtung" durchgeführt haben.

14. Anlage nach einem der Ansprüche 1 bis 13, **dadurch gekennzeichnet, dass** jedes wegnehmbare Hindernis (16) durch einen Vorhang aus unter Druck stehendem Wasser gebildet wird, das über Düsen zugeführt wird, die in der Beschichtung der Bahn münden, wobei die Unterbrechung der Zufuhr gesteuert wird durch das Vorbeifahren eines Fahrzeugs oberhalb eines bei den Düsen angeordneten Sensors (17), oberhalb eines am Ende der Bahn angeordneten Sensors (19) oder durch Anhalten eines Fahrzeugs oberhalb eines Sensors (17, 18).
